# EUROPEAN PATENT APPLICATION

(11) **EP 4 582 729 A1**
(43) Date of publication of application: **09.07.2025**
(21) Application number: 24160170.7
(22) Date of filing: 28.02.2024
(51) Int. Cl.: F16M 11/30, F16M 11/28

(54) **STAND AND ELECTRONIC EQUIPMENT**

(30) Priority: 08.01.2024 TW 113100748
(71) Applicant: BenQ Corporation, Taipei City 11492 (TW)
(72) Inventor: CHIANG, Chin-Fu, 11492 Taipei City (TW); LI, Chih Wen, 11492 Taipei City (TW)
(74) Representative: Becker, Eberhard

(57) **Abstract**

A stand (120, 120') includes a base (121), a support component (122), an elastic component (123) and a damping gear (124, 124'). The support component (122) is slidably disposed on the base (121) and adapted to support an electronic device (110) and slide to a predetermined position relative to the base (121). The elastic component (123) is connected between the base (121) and the support component (122). The damping gear (124, 124') is rotatably disposed on the base (121) and adapted to be coupled to the support component (122). The support component (122) resists a weight (W1) from the electronic device (110) at least by an elastic force (S) of the elastic component (123) and a damping force (B) of the damping gear (124, 124') to be positioned at the predetermined position. In addition, an electronic equipment (100, 100') includes the stand (120, 120').

## Description

### BACKGROUND

### Technical Field

The disclosure relates to a stand and an electronic equipment, and in particular to a stand having a damping gear and an electronic equipment including the stand.

### Description of Related Art

A stand used with an elevating screen is generally calculated to balance the weight of the screen with the spring force in the stand, maintain the screen within a predetermined height range, and allow a user to move the screen up and down with consistent force. However, if an assembly such as a light shield, a light stand or a video device is additionally installed on the screen, the overall weight of the screen and the spring force in the stand may be unbalanced, causing the screen to slide down or causing the push force required to move the screen up and down to be inconsistent. On the other hand, the spring in the stand is usually equipped with a friction block that is configured to accurately maintain the position of the screen through friction positioning effect. However, the friction block wears out after long-term use and cannot properly exert the friction positioning effect.

### SUMMARY

The disclosure provides a stand and an electronic equipment that may accurately maintain the height of an elevating electronic device and the push force required to move the electronic device up and down.

The stand of the disclosure includes a base, a support component, an elastic component and a damping gear. The support component is slidably disposed on the base and adapted to support an electronic device and slide to a predetermined position relative to the base. The elastic component is connected between the base and the support component. The damping gear is rotatably disposed on the base and adapted to be coupled to the support component. The support component resists a weight from the electronic device at least by an elastic force of the elastic component and a damping force of the damping gear to be positioned at the predetermined position. The damping gear has an adjusting portion and is adapted to adjust the damping force through the adjusting portion.

The electronic equipment of the disclosure includes an electronic device and a stand. The stand includes a base, a support component, an elastic component and a damping gear. The support component is slidably disposed on the base and adapted to support the electronic device and slide to a predetermined position relative to the base. The elastic component is connected between the base and the support component. The damping gear is rotatably disposed on the base and adapted to be coupled to the support component. The support component resists a weight from the electronic device at least by an elastic force of the elastic component and a damping force of the damping gear to be positioned at the predetermined position. The damping gear has an adjusting portion and is adapted to adjust the damping force through the adjusting portion.

In an embodiment of the disclosure, the above-mentioned stand is adapted to rise relative to the base along a first direction and is adapted to descend relative to the base along a second direction opposite to the first direction, and the elastic component provides the elastic force along the first direction.

In an embodiment of the disclosure, the above-mentioned damping gear is a one-way damping gear and is adapted to provide the damping force along the first direction.

In an embodiment of the disclosure, the above-mentioned damping gear is a bidirectional damping gear and is adapted to provide the damping force along the first direction and the second direction.

In an embodiment of the disclosure, the above-mentioned stand further includes a friction component. The friction component is disposed on the support component and contacts the base. The stand further resists the weight from the electronic device by a friction force between the friction component and the base to be positioned at the predetermined position.

In an embodiment of the disclosure, the above-mentioned damping gear is adapted to be switched to a coupling state and coupled to the support component, and the damping gear is adapted to be switched to a release state without being coupled to the support component.

In an embodiment of the disclosure, the above-mentioned stand further includes a rack and a connecting rod. The connecting rod is connected between the rack and the support component. The connecting rod is adapted to drive the rack to engage with the damping gear so that the damping gear is switched to the coupling state, and the connecting rod is adapted to drive the rack to be separated from the damping gear so that the damping gear is switched to the release state.

In an embodiment of the disclosure, the above-mentioned stand further includes a pressing component. The pressing component is connected to the connecting rod and protrudes outside the support component. The pressing component is adapted to receive force to drive the connecting rod to swing.

In an embodiment of the disclosure, the above-mentioned stand further includes a rack. The rack is connected to the support component. The damping gear is movably disposed on the base. The damping gear is adapted to move to a first position and engage with the rack so that the damping gear is switched to the coupling state. Moreover, the damping gear is adapted to move to a second position and be separated from the rack so that the damping gear is switched to the release state.

In an embodiment of the disclosure, the above-mentioned base has an opening, the position of the opening corresponds to the position of the adjusting portion, and the adjusting portion is adapted to be adjusted through the opening.

Based on the above, in the stand of the disclosure, the damping gear may adjust the damping force through the adjusting portion thereof. Accordingly, when an assembly such as a light shield, a light stand or a video device is additionally installed on the electronic device, the damping gear may modify the damping force accordingly to maintain the balance between the overall weight of the electronic device and the support force (at least including the elastic force of the elastic component and the damping force of the damping gear). In addition, when the friction block provided with the elastic component wears out after long-term use, the damping gear may modify the damping force accordingly to compensate for the friction positioning force lost by the friction block due to wear and tear. Accordingly, the stand of the disclosure may accurately maintain the height of the elevating electronic device and the push force required to move the electronic device up and down.

### BRIEF DESCRIPTION OF THE DRAWINGS

FIG. 1A is a schematic diagram of a partial structure of an electronic equipment according to an embodiment of the disclosure.
FIG. 1B illustrates the movement of the electronic device of FIG. 1A.
FIG. 2A illustrates the damping gear of FIG. 1A coupled to the support component.
FIG. 2B illustrates the damping gear of FIG. 1B coupled to the support component.
FIG. 3 is a partial perspective view of the base of FIG. 1A.
FIG. 4 is a schematic diagram of a partial structure of an electronic equipment according to another embodiment of the disclosure.
FIGS. 5A and 5B are schematic diagrams of the operation of the damping gear of FIG. 4.

### DESCRIPTION OF THE EMBODIMENTS

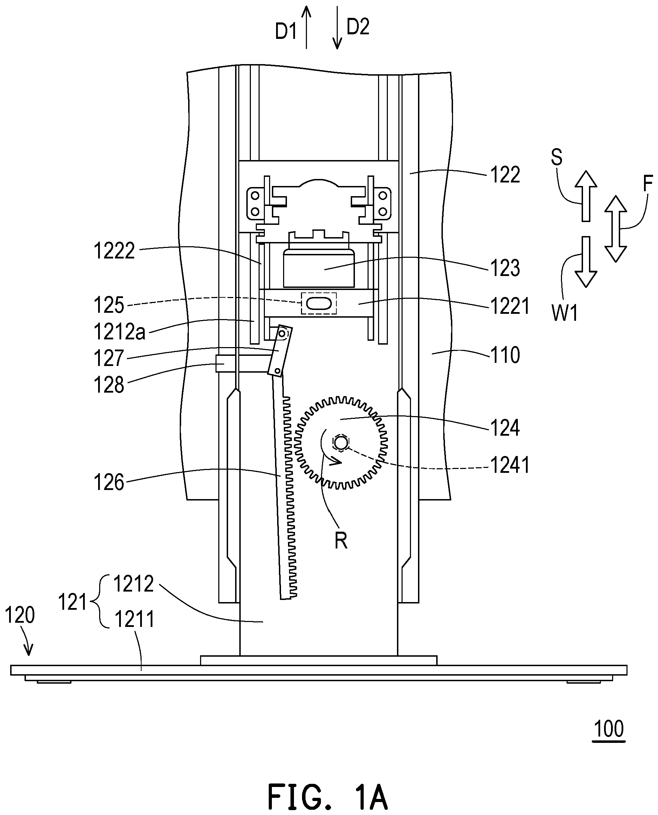

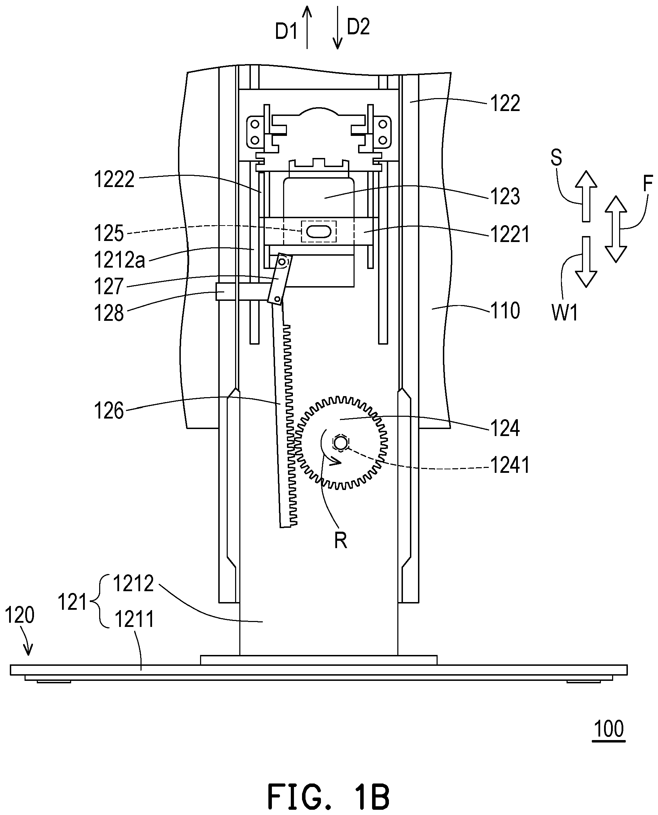

FIG. 1A is a schematic diagram of a partial structure of an electronic equipment according to an embodiment of the disclosure. FIG. 1B illustrates the movement of the electronic device of FIG. 1A. Referring to FIGS. 1A and 1B, an electronic equipment 100 of the embodiment includes an electronic device 110 and a stand 120. The electronic device 110 is, for example, a screen. The stand 120 includes a base 121, a support component 122, an elastic component 123 and a friction component 125. The base 121 includes a chassis 1211 and a support body 1212. The support body 1212 is connected to the chassis 1211 and extends upward from the chassis 1211. The support body 1212 has an outer slide rail 1212a.

The support component 122 has a sliding portion 1221 and an inner slide rail 1222. The sliding portion 1221 and the inner slide rail 1222 are fixed in the internal space of the support component 122. The support component 122 is slidably disposed on the outer slide rail 1212a of the support body 1212 of the base 121 along up and down directions (a first direction D1 and a second direction D2) through the inner slide rail 1222. The support component 122 is adapted to support the electronic device 110 and rise relative to the base 121 along the first direction D1 or descend relative to the base 121 along the second direction D2 opposite to the first direction D1 to slide to a predetermined position (such as the position shown in FIG. 1A, the position shown in FIG. 1B or other positions of appropriate height).

The elastic component 123 is, for example, a coil spring and is connected between the support body 1212 of the base 121 and the support component 122. The elastic component 123 is configured to provide an elastic force S along the first direction D1. The friction component 125 is disposed on the sliding portion 1221 of the support component 122 and contacts the support body 1212 of the base 121. The friction component 125 is configured to provide a friction force F in the first direction D1 and the second direction D2. The support component 122 resists a weight (FIGS. 1A and 1B illustrate a weight W1 of the electronic device 110 itself) from the electronic device 110 by the elastic force S of the elastic component 123 and the friction force F between the friction component 125 and the support body 1212 of the base 121 to be positioned at the above predetermined position. The coil spring (elastic component 123) partially stretches or retracts as the support component 122 slides relative to the support body 1212. Such an action is a coil spring mode of action known in the art, which is not described in detail here and is merely schematically illustrated in the drawings.

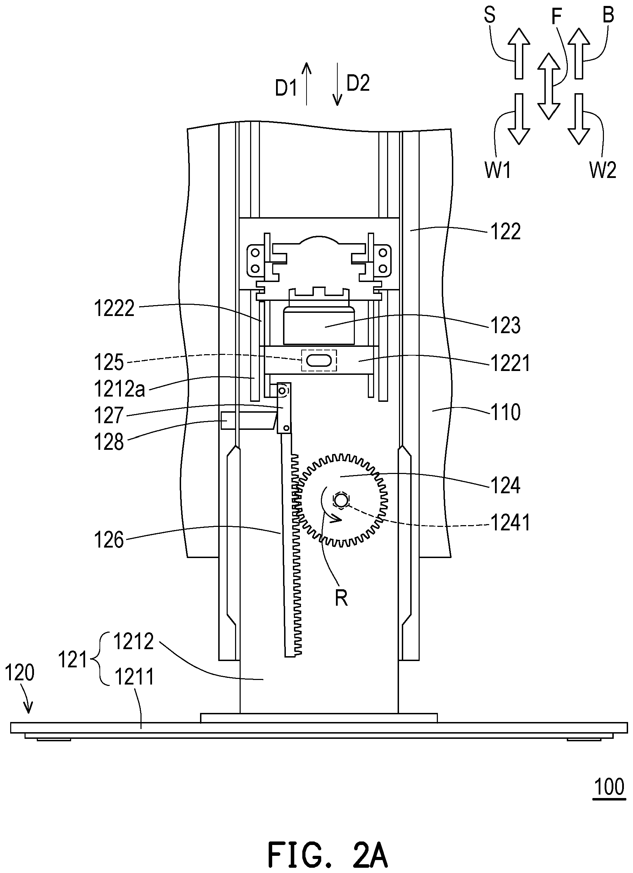

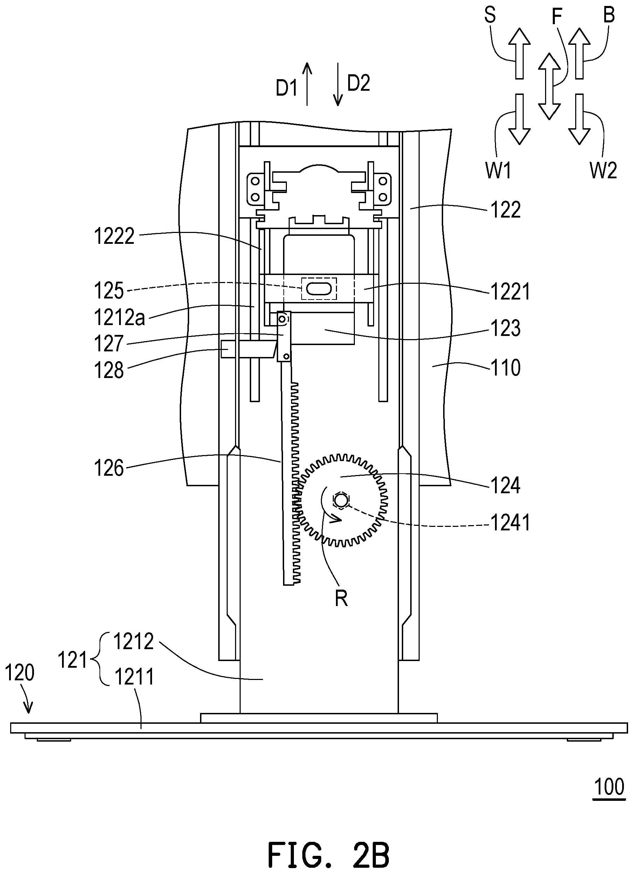

FIG. 2A illustrates the damping gear of FIG. 1A coupled to the support component. FIG. 2B illustrates the damping gear of FIG. 1B coupled to the support component. The stand 120 of the embodiment further includes a damping gear 124. The damping gear 124 is rotatably disposed on the support body 1212 of the base 121 and is adapted to be coupled to the support component 122 as shown in FIGS. 2A and 2B. The damping gear 124 is, for example, a one-way damping gear and provides a damping force B when rotating in a rotation direction R. Accordingly, when the damping gear 124 is coupled to the support component 122, in addition to resisting the weight from the electronic device 110 by the elastic force S of the elastic component 123 and the friction force F of the friction component 125 as mentioned above, the support component 122 further resists the weight (FIGS. 2A and 2B illustrate the weight W1 of the electronic device 110 itself plus a weight W2 of an assembly such as a light shield, a light stand or a video device additionally installed on the electronic device 110) from the electronic device 110 by the damping force B provided by the damping gear 124 along the first direction D1 to be positioned at the predetermined position. In addition, the damping gear 124 has an adjusting portion 1241 and is adapted to adjust the damping force through the adjusting portion 1241.

Under the above configuration, when an assembly such as a light shield, a light stand or a video device is additionally installed on the electronic device 110, the damping gear 124 may modify the damping force B accordingly to maintain the balance between the overall weight of the electronic device 110 and a support force (including the elastic force of the elastic component 123, the damping force of the damping gear 124 and the friction force of the friction component 125). In addition, when a friction block (i.e., the friction component 125) provided with the elastic component 123 wears out after long-term use, the damping gear 124 may modify the damping force B accordingly to compensate for the friction positioning force lost by the friction block due to wear and tear. Accordingly, the stand 120 of the embodiment may accurately maintain the height of the elevating electronic device 110 and the push force required to move the electronic device 110 up and down.

In other embodiments, the damping gear 124 may be a bidirectional damping gear and is adapted to provide the damping force along the first direction D1 and the second direction D2 to more effectively compensate for the friction positioning force lost by the friction block due to wear and tear.

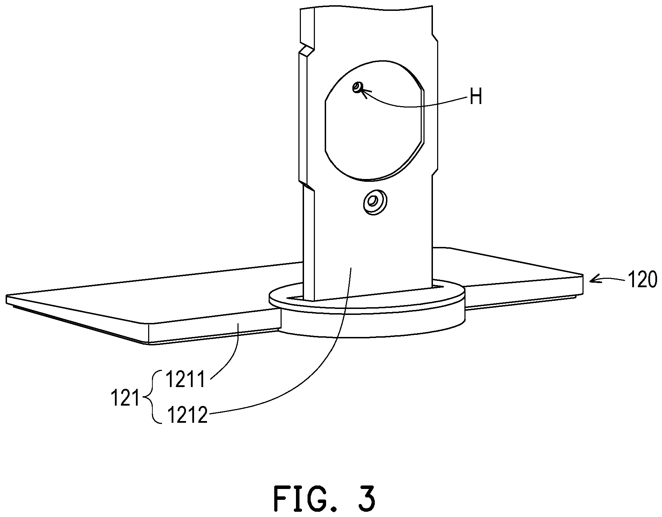

FIG. 3 is a partial perspective view of the base of FIG. 1A. Referring to FIG. 3, the support body 1211 of the base 121 of the embodiment has an opening H. The position of the opening H corresponds to the position of the adjusting portion 1241 (shown in FIG. 1A). The adjusting portion 1241 is adapted to be adjusted through the opening H. Specifically, the adjusting portion 1241 is, for example, a torque adjusting nut. The user may extend a tool corresponding to the torque adjusting nut through the opening H to the torque adjusting nut and rotate the torque adjusting nut to adjust the damping force B of the damping gear 124. The function of the torque adjusting nut of the damping gear 124 is known in the art and is not described in detail here.

The coupling method of the damping gear 124 and the support component 122 in the embodiment is described in detail below. The stand 120 of the embodiment further includes a rack 126 and a connecting rod 127. The connecting rod 127 is connected between the rack 126 and the support component 122. Specifically, two ends of the connecting rod 127 are pivotally connected to the rack 126 and the support component 122 respectively. The connecting rod 127 is adapted to drive the rack 126 to engage with the damping gear 124 as shown in FIG. 2A or FIG. 2B. At this time, the damping gear 124 is switched to a coupling state and coupled to the support component 122. Moreover, the connecting rod 127 is adapted to drive the rack 126 to be separated from the damping gear 124 as shown in FIG. 1A or FIG. 1B. At this time, the damping gear 124 is switched to a release state without being coupled to the support component 122.

Furthermore, the stand 120 of the embodiment further includes a pressing component 128. The pressing component 128 is connected to the connecting rod 127 and protrudes outside the support component 122. The pressing component 128 is adapted for the user to press and receiving force to drive the connecting rod 127 to swing.

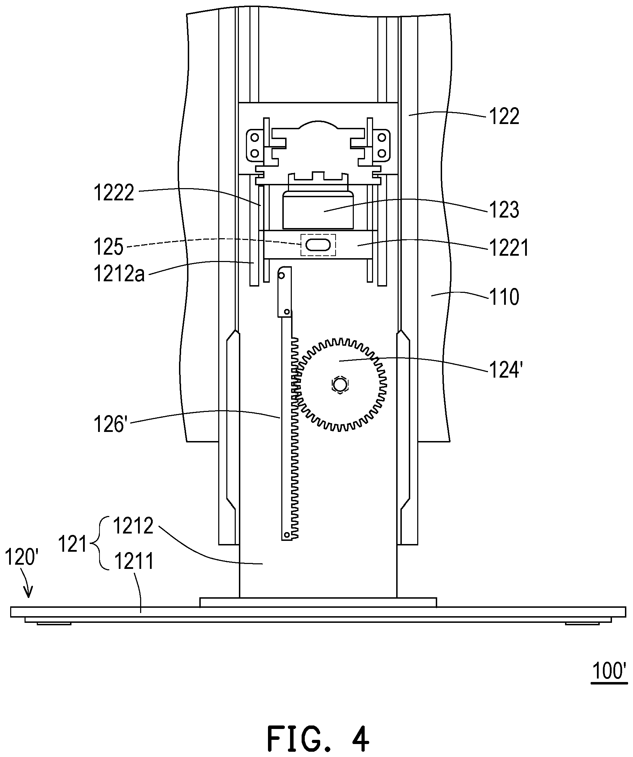

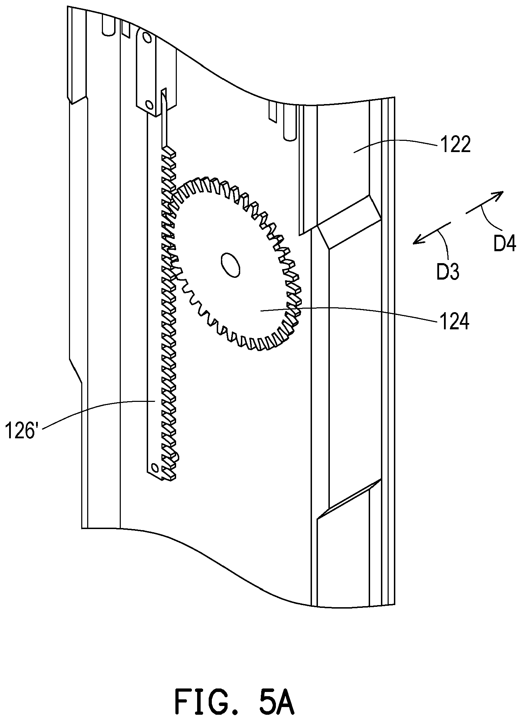

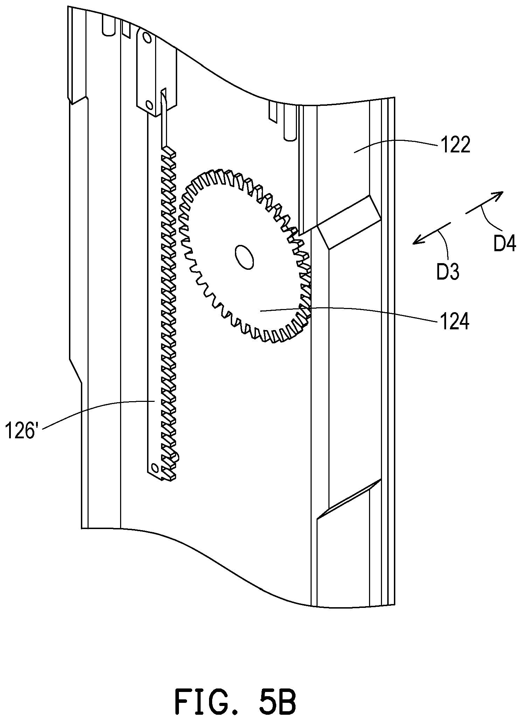

FIG. 4 is a schematic diagram of a partial structure of an electronic equipment according to another embodiment of the disclosure. FIGS. 5A and 5B are schematic diagrams of the operation of the damping gear of FIG. 4. The main difference between an electronic equipment 100' shown in FIG. 4 and the electronic equipment 100 of the aforementioned embodiment is that a stand 120' of the electronic equipment 100' does not include the connecting rod 127 and the pressing component 128 in the aforementioned embodiment, and that a rack 126' of the stand 120' is of a fixed type. Moreover, a damping gear 124' of the stand 120' is movably disposed on the support body 1212 of the base 121. The damping gear 124' is adapted to move to a first position of FIG. 5A and engage with the rack 126' so that the damping gear 124' is switched to the coupling state. The damping gear 124' is adapted to move to a second position of FIG. 5B to be separated from the rack 126' so that the damping gear 124' is switched to the release state. The remaining configuration and mode of action of the electronic equipment 100' are the same or similar to the configuration and mode of action of the electronic equipment 100 of the aforementioned embodiment, and are not described again here.

In summary, in the stand of the disclosure, the damping gear may adjust the damping force through the adjusting portion thereof. Accordingly, when an assembly such as a light shield, a light stand or a video device is additionally installed on the electronic device, the damping gear may modify the damping force accordingly to maintain the balance between the overall weight of the electronic device and the support force (for example, including the elastic force of the elastic component, the damping force of the damping gear and the friction force of the friction component). In addition, when the friction block provided with the elastic component wears out after long-term use, the damping gear may modify the damping force accordingly to compensate for the friction positioning force lost by the friction block due to wear and tear. Accordingly, the stand of the disclosure may accurately maintain the height of the elevating electronic device and the push force required to move the electronic device up and down.

## Claims

1. A stand (120, 120'), comprising:
a base (121);
a support component (122), slidably disposed on the base (121) and adapted to support an electronic device (110) and slide to a predetermined position relative to the base (121);
an elastic component (123), connected between the base (121) and the support component (122); and
a damping gear (124, 124'), rotatably disposed on the base (121) and adapted to be coupled to the support component (122),
wherein the support component (122) resists a weight (W1) from the electronic device (110) at least by an elastic force (S) of the elastic component (123) and a damping force (B) of the damping gear (124, 124') to be positioned at the predetermined position,
wherein the damping gear (124, 124') has an adjusting portion (1241) and is adapted to adjust the damping force (B) through the adjusting portion (1241).

2. The stand (120, 120') according to claim 1, wherein the support component (122) is adapted to rise relative to the base (121) along a first direction (D1) and is adapted to descend relative to the base (121) along a second direction (D2) opposite to the first direction (D1), and the elastic component (123) provides the elastic force (S) along the first direction (D1).

3. The stand (120) according to claim 2, wherein the damping gear (124) is a one-way damping gear and is adapted to provide the damping force (B) along the first direction (D 1), or the damping gear (124, 124') is a bidirectional damping gear and is adapted to provide the damping force (B) along the first direction (D1) and the second direction (D2).

4. The stand (120, 120') according to claim 1, further comprising a friction component (125), wherein the friction component (125) is disposed on the support component (122) and contacts the base (121), and the support component (122) further resists the weight (W1) from the electronic device (110) by a friction force (F) between the friction component (125) and the base (121) to be positioned at the predetermined position.

5. The stand (120, 120') according to claim 1, wherein the damping gear (124, 124') is adapted to be switched to a coupling state and coupled to the support component (122), and the damping gear (124, 124') is adapted to be switched to a release state without being coupled to the support component (122).

6. The stand (120) according to claim 5, further comprising a rack (126) and a connecting rod (127), wherein the connecting rod (127) is connected between the rack (126) and the support component (122), the connecting rod (127) is adapted to drive the rack (126) to engage with the damping gear (124) so that the damping gear (124) is switched to the coupling state, and the connecting rod (127) is adapted to drive the rack (126) to be separated from the damping gear (124) so that the damping gear (124) is switched to the release state.

7. The stand (120') according to claim 5, further comprising a rack (126'), wherein the rack (126') is connected to the support component (122), the damping gear (124') is movably disposed on the base (121), the damping gear (124) is adapted to move to a first position and engage with the rack (126') so that the damping gear (124') is switched to the coupling state, and the damping gear (124') is adapted to move to a second position and be separated from the rack (126') so that the damping gear (124') is switched to the release state.

8. The stand (120, 120') according to claim 1, wherein the base (121) has an opening (H), a position of the opening (H) corresponds to a position of the adjusting portion (1241), and the adjusting portion (1241) is adapted to be adjusted through the opening (H).

9. An electronic equipment (100, 100'), comprising:
an electronic device (110); and
a stand (120, 120'), comprising:
a base (121);
a support component (122), slidably disposed on the base (121) and adapted to support the electronic device (110) and slide to a predetermined position relative to the base (121);
an elastic component (123), connected between the base (121) and the support component (122); and
a damping gear (124, 124'), rotatably disposed on the base (121) and adapted to be coupled to the support component (122),
wherein the support component (122) resists a weight (W1) from the electronic device (110) at least by an elastic force (S) of the elastic component (123) and a damping force (B) of the damping gear (124, 124') to be positioned at the predetermined position,
wherein the damping gear (124, 124') has an adjusting portion (1241) and is adapted to adjust the damping force (B) through the adjusting portion (1241).

10. The electronic equipment (100, 100') according to claim 9, wherein the support component (122) is adapted to rise relative to the base (121) along a first direction (D1) and is adapted to descend relative to the base (121) along a second direction (D2) opposite to the first direction (D1), and the elastic component (123) provides the elastic force (S) along the first direction (D1).

11. The electronic equipment (100, 100') according to claim 10, wherein the damping gear (124, 124') is a one-way damping gear and is adapted to provide the damping force (B) along the first direction (D1), or the damping gear (124, 124') is a bidirectional damping gear and is adapted to provide the damping force (B) along the first direction (D1) and the second direction (D2).

12. The electronic equipment (100, 100') according to claim 9, wherein the stand (120, 120') further comprises a friction component (125), the friction component (125) is disposed on the support component (122) and contacts the base (121), and the support component (122) further resists the weight (W1) from the electronic device (110) by a friction force (F) between the friction component (125) and the base (121) to be positioned at the predetermined position.

13. The electronic equipment (100, 100') according to claim 9, wherein the damping gear (124, 124') is adapted to be switched to a coupling state and coupled to the support component (122), and the damping gear (124, 124') is adapted to be switched to a release state without being coupled to the support component (122).

14. The electronic equipment (100) according to claim 13, wherein the stand (120) further comprises a rack (126) and a connecting rod (127), the connecting rod (127) is connected between the rack (126) and the support component (122), the connecting rod (127) is adapted to drive the rack (126) to engage with the damping gear (124) so that the damping gear (124) is switched to the coupling state, and the connecting rod (127) is adapted to drive the rack (126) to be separated from the damping gear (124) so that the damping gear (124) is switched to the release state.

15. The electronic equipment (100') according to claim 13, wherein the stand (120') further comprises a rack (126'), the rack (126') is connected to the support component (122), the damping gear (124') is movably disposed on the base (121), the damping gear (124') is adapted to move to a first position and engage with the rack (126') so that the damping gear (124') is switched to the coupling state, and the damping gear (124') is adapted to move to a second position and be separated from the rack (126') so that the damping gear (124') is switched to the release state.

## Amended claims

### Amended claims in accordance with Rule 137(2) EPC.

1. A stand (120, 120'), comprising:
a base (121);
a support component (122), slidably disposed on the base (121) and adapted to support an electronic device (110) and slide to a predetermined position relative to the base (121);
an elastic component (123), connected between the base (121) and the support component (122); and
a damping gear (124, 124'), rotatably disposed on the base (121) and adapted to be coupled to the support component (122),
wherein the support component (122) resists a weight (W1) from the electronic device (110) at least by an elastic force (S) of the elastic component (123) and a damping force (B) of the damping gear (124, 124') to be positioned at the predetermined position,
wherein the damping gear (124, 124') has an adjusting portion (1241) and is adapted to adjust the damping force (B) through the adjusting portion (1241),
wherein the damping gear (124, 124') is adapted to be switched to a coupling state and coupled to the support component (122), and the damping gear (124, 124') is adapted to be switched to a release state without being coupled to the support component (122),
wherein the stand is **characterized in that**
the stand further comprises a rack (126) and a connecting rod (127), the connecting rod (127) is connected between the rack (126) and the support component (122), the connecting rod (127) is adapted to drive the rack (126) to engage with the damping gear (124) so that the damping gear (124) is switched to the coupling state, and the connecting rod (127) is adapted to drive the rack (126) to be separated from the damping gear (124) so that the damping gear (124) is switched to the release state.

2. The stand (120, 120') according to claim 1, wherein the support component (122) is adapted to rise relative to the base (121) along a first direction (D1) and is adapted to descend relative to the base (121) along a second direction (D2) opposite to the first direction (D1), and the elastic component (123) provides the elastic force (S) along the first direction (D1).

3. The stand (120) according to claim 2, wherein the damping gear (124) is a one-way damping gear and is adapted to provide the damping force (B) along the first direction (D1), or the damping gear (124, 124') is a bidirectional damping gear and is adapted to provide the damping force (B) along the first direction (D1) and the second direction (D2).

4. The stand (120, 120') according to claim 1, further comprising a friction component (125), wherein the friction component (125) is disposed on the support component (122) and contacts the base (121), and the support component (122) further resists the weight (W1) from the electronic device (110) by a friction force (F) between the friction component (125) and the base (121) to be positioned at the predetermined position.

5. The stand (120, 120') according to claim 1, wherein the base (121) has an opening (H), a position of the opening (H) corresponds to a position of the adjusting portion (1241), and the adjusting portion (1241) is adapted to be adjusted through the opening (H).
